(19) **Europäisches Patentamt / European Patent Office / Office européen des brevets**

(11) **EP 4 453 511 B1**

(12) **FASCICULE DE BREVET EUROPEEN**

(45) Date de publication et mention de la délivrance du brevet:
**01.07.2026 Bulletin 2026/27**

(21) Numéro de dépôt: **22840744.1**

(22) Date de dépôt: **21.12.2022**

(51) Classification Internationale des Brevets (IPC):
*G01C 21/20* $^{(2006.01)}$  *G05D 1/00* $^{(2024.01)}$
*G08G 5/22* $^{(2025.01)}$  *G08G 5/26* $^{(2025.01)}$
*G08G 5/32* $^{(2025.01)}$  *G08G 5/56* $^{(2025.01)}$
*G08G 5/55* $^{(2025.01)}$  *G08G 5/59* $^{(2025.01)}$
*G08G 5/76* $^{(2025.01)}$

(52) Classification Coopérative des Brevets (CPC):
**G05D 1/101; G01C 21/20; G08G 5/22; G08G 5/26; G08G 5/32; G08G 5/56;** G08G 5/55; G08G 5/59; G08G 5/76

(86) Numéro de dépôt international:
**PCT/EP2022/087200**

(87) Numéro de publication internationale:
**WO 2023/118275 (29.06.2023 Gazette 2023/26)**

(54) **PROCÉDÉ ET DISPOSITIF DE GÉNÉRATION DE TRAJECTOIRES D'UN APPAREIL MOBILE**

VERFAHREN UND VORRICHTUNG ZUR ERZEUGUNG VON PFADEN FÜR EIN MOBILES GERÄT

METHOD AND DEVICE FOR GENERATING PATHS FOR A MOBILE APPARATUS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2021 FR 2114067**

(43) Date de publication de la demande:
**30.10.2024 Bulletin 2024/44**

(73) Titulaire: **THALES**
**92400 Courbevoie (FR)**

(72) Inventeurs:
- **GAYRAUD, Lionel**
  **91767 PALAISEAU (FR)**
- **THIRIET, Aurelien**
  **33700 MERIGNAC (FR)**
- **SAVEANT, Pierre**
  **91767 PALAISEAU (FR)**

(74) Mandataire: **Lavoix**
**2, place d'Estienne d'Orves**
**75441 Paris Cedex 09 (FR)**

(56) Documents cités:
CN-A- 113 703 483     FR-A1- 3 025 919
FR-A1- 3 038 999

**Description**

La présente invention concerne un procédé de génération de trajectoire(s) d'un appareil mobile, respectant une contrainte temporelle prédéterminée, entre un point de départ et un point d'arrivée, ledit appareil mobile ayant des contraintes de déplacement prédéterminées. L'invention concerne également un dispositif associé, et un produit programme d'ordinateur associé.

L'invention se situe dans le domaine de la commande de déplacement d'appareils mobiles, par exemple aériens, marins ou sous-marins, et en particulier de la génération de trajectoires de déplacement des appareils mobiles qui respectent des contraintes temporelles, également appelés trajectoires synchronisées.

Pour deux appareils mobiles distincts, deux trajectoires sont dites synchronisées si elles respectent une contrainte temporelle, par exemple l'arrivée en un même point, dit point d'arrivée, dans une plage temporelle prédéterminée, ou dans des plages successives prédéterminées. Bien entendu, cela est généralisable à un nombre quelconque d'appareils mobiles supérieur à deux.

Par la suite, une durée de parcours d'une trajectoire par un appareil mobile sera appelée durée de trajectoire.

Pour un seul appareil mobile, la synchronisation consiste à fixer une plage temporelle d'arrivée, par exemple par rapport à un objectif à atteindre, ou, de manière équivalente, une plage de durée de trajectoire donnée. Ainsi, pour chaque appareil mobile ayant des contraintes de déplacement, par exemple une vitesse de déplacement minimale et une vitesse de déplacement maximale, ou, dans certaines applications, une vitesse de déplacement constante, il convient de générer une trajectoire de durée comprise dans une plage de durée de trajectoire, pour assurer une arrivée conforme à une contrainte temporelle.

L'invention trouve notamment une application particulière dans le domaine de la planification coopérative de trajectoires pour des appareils mobiles, par exemple des aéronefs, avec ou sans pilote à bord, pour des missions données. Par exemple, pour une mission donnée, civile ou militaire, les aéronefs sans pilote à bord doivent se rendre à un point d'arrivée de manière coordonnée temporellement, en partant de points de départ distincts. Alternativement, plusieurs appareils mobiles de types différents sont à coordonner, par exemple des appareils mobiles ayant des contraintes de déplacement différentes (e.g. vitesse minimale, vitesse maximale).

En plus des contraintes de déplacement, des contraintes relatives aux routes possibles sont imposées, ces contraintes pouvant être dues à des conditions naturelles (reliefs, courants, météo) ou à des conditions externes imposées (e.g. zones de passage, zones à éviter, zones à survoler).

Un problème consiste alors à générer des trajectoires synchronisées pour un ou plusieurs appareils mobiles considérés. Dans le cas particulier d'une arrivée coordonnée à un point d'arrivée, la synchronisation prend en considération l'appareil mobile le plus lent. Pour les autres appareils, une trajectoire détournée, de durée augmentée, est calculée.

On connaît diverses méthodes de calcul de trajectoire détournée sur la base d'un point de détour choisi, entre un point de départ et un point d'arrivée, la trajectoire détournée étant une trajectoire de durée plus longue (i.e. ralentie). Par exemple, une trajectoire entre un point de départ A et un point d'arrivée B, détournée sur la base d'un point de détour C, peut-être construite en concaténant deux demi-trajectoires formées entre le point de départ A et le point de détour C d'une part, et du point de détour C vers le point d'arrivée B d'autre part.

En plus de la méthode choisie pour le calcul de trajectoires, par exemple en utilisant des modélisations mathématiques, un des problèmes qui se pose est le choix judicieux d'un ou plusieurs point(s) de détour C pour respecter la contrainte temporelle imposée.

On comprend que dans un périmètre spatial donné, en particulier pour un appareil mobile aérien ou maritime, un grand nombre de points de détour candidats est disponible, et la sélection d'un ou plusieurs points de détour respectant la contrainte temporelle a un coût calculatoire élevé.

Les documents FR 3038999 A1, FR 3025919 A1 et CN 11 3703483 A décrivent des méthodes et systèmes de modification de trajectoires d'aéronefs sous contraintes spatiales et/ou temporelles.

L'invention a pour objet de proposer une méthode permettant de trouver un ou plusieurs points de détour permettant de respecter la contrainte temporelle imposée de manière plus efficace.

A cet effet, l'invention propose, selon un aspect, un procédé de génération de trajectoire(s) d'un appareil mobile aérien ou maritime, respectant une contrainte temporelle prédéterminée, entre un point de départ et un point d'arrivée, dans un périmètre spatial donné, la génération de trajectoire mettant en œuvre une méthode choisie de calcul de trajectoire détournée, sur la base d'un point de détour sélectionné, reliant le point de départ et le point d'arrivée. Ce procédé étant mis en œuvre par un processeur d'un dispositif de calcul programmable et comporte des étapes de :

- détermination d'un premier ensemble de premiers points de détour dans ledit périmètre spatial donné, et pour chacun des premiers points de détour, calcul d'une durée calculée de trajectoire détournée obtenue par ladite méthode choisie de calcul de trajectoire détournée sur la base dudit premier point de détour,
- détermination d'un deuxième ensemble de deuxièmes points de détour, chaque deuxième point de détour ayant une durée estimée de trajectoire détournée associée, respectant ladite contrainte temporelle, ladite durée estimée étant calculée à partir de durées associées à des premiers points de détour voisins dudit deuxième point de détour.

Avantageusement, le procédé de l'invention, grâce à la détermination de deuxièmes points de détour, obtenus en utilisant une estimation de durée de trajectoire détournée associée, calculée à partir des durées calculées associées à des premiers points de détour voisins dudit deuxième point de détour, permet d'alléger la charge calculatoire pour obtenir des points de détour candidats, respectant la contrainte temporelle.

Le procédé de génération de trajectoire(s) selon l'invention peut également présenter une ou plusieurs des caractéristiques ci-dessous, prises indépendamment ou selon toutes les combinaisons techniquement envisageables.

Le procédé comporte en outre une détermination d'un troisième ensemble de troisièmes points de détour, comprenant au moins un troisième point de détour, chaque troisième point de détour étant sélectionné parmi lesdits deuxièmes points de détour et étant tel que la durée calculée de trajectoire détournée obtenue par ladite méthode choisie de calcul de trajectoire détournée sur la base dudit troisième point de détour respecte la contrainte temporelle.

Le calcul de durée estimée de trajectoire détournée associée à un deuxième point de détour met en œuvre une interpolation de durées calculées associées à des premiers points de détour voisins, prenant en compte une distance entre ledit deuxième point de détour et chacun des premiers points de détour voisins.

La détermination d'un deuxième ensemble de deuxièmes points de détour comporte une sélection de deuxièmes points de détour candidats et, pour chaque deuxième point de détour candidat, une détermination de premiers points de détour voisins.

Le premier ensemble comporte des premiers points de détour répartis sur une première grille régulière de premier pas de grille prédéterminé, et le deuxième ensemble de deuxièmes points de détour est obtenu à partir de deuxièmes points de détour candidats, répartis sur une deuxième grille régulière de deuxième pas de grille, le deuxième pas de grille étant inférieur au premier pas de grille.

Les premiers points de détour et les deuxièmes points de détour sont répartis aléatoirement ou pseudo-aléatoirement dans au moins une partie dudit périmètre spatial.

Le procédé comporte en outre, pour chaque premier point de détour, un calcul et une mémorisation d'au moins un facteur de mérite associé, et, pour chaque deuxième point de détour, un calcul d'au moins un facteur de mérite estimé associé, la détermination d'un troisième ensemble de troisièmes points de détour étant en outre fonction desdits facteurs de mérite estimés.

Le procédé comporte un ordonnancement des deuxièmes points de détour en fonction d'un facteur de mérite associé et la sélection d'un troisième point de détour étant effectuée dans l'ordre décroissant des valeurs de facteur de mérite.

Selon un autre aspect, l'invention concerne un dispositif de génération de trajectoire(s) d'un appareil mobile aérien ou maritime, respectant une contrainte temporelle prédéterminée, entre un point de départ et un point d'arrivée, dans un périmètre spatial donné, comportant un module configuré pour une génération de trajectoire mettant en œuvre une méthode choisie de calcul de trajectoire détournée, sur la base d'un point de détour sélectionné, reliant le point de départ et le point d'arrivée. Ce dispositif comporte au moins un processeur configuré pour mettre en œuvre :

- un module configuré pour déterminer un premier ensemble de premiers points de détour dans ledit périmètre spatial donné, et pour chacun des premiers points de détour, calculer une durée calculée de trajectoire détournée obtenue par ladite méthode choisie de calcul de trajectoire détournée sur la base dudit premier point de détour,
- un module configuré pour déterminer un deuxième ensemble de deuxièmes points de détour, chaque deuxième point de détour ayant une durée estimée de trajectoire détournée associée, respectant ladite contrainte temporelle, ladite durée estimée étant calculée à partir de durées calculées associées à des premiers points de détour voisins dudit deuxième point de détour.

Selon un mode de réalisation, le dispositif comporte en outre un module de détermination d'un troisième ensemble de troisièmes points de détour, comprenant au moins un troisième point de détour, chaque troisième point de détour étant sélectionné parmi lesdits deuxièmes points de détour et étant tel que la durée calculée de trajectoire détournée obtenue par ladite méthode choisie de calcul de trajectoire détournée sur la base dudit troisième point de détour respecte la contrainte temporelle.

Avantageusement, le dispositif de génération de trajectoire(s) est configuré pour mettre en œuvre le procédé de génération de trajectoire(s), selon toutes ses variantes envisagées.

Selon un autre aspect, l'invention concerne un programme d'ordinateur comportant des instructions logicielles qui, lorsqu'elles sont exécutées par un dispositif électronique programmable, mettent en œuvre un procédé de génération de trajectoire(s) tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 est un exemple schématique de trajectoires synchronisées d'appareils mobiles ;
[Fig 2] la figure 2 est un système de guidage d'appareil mobile comprenant un dispositif de génération de trajectoire(s) respectant une contrainte temporelle ;

[Fig 3] la figure 3 est un logigramme des principales étapes d'un procédé de génération de trajectoire selon un premier mode de réalisation ;

[Fig 4] la figure 4 est un premier exemple schématique de trajectoire détournée obtenue par une première méthode de calcul de trajectoire ;

[Fig 5] la figure 5 est un deuxième exemple schématique de trajectoire détournée obtenue par une deuxième méthode de calcul de trajectoire ;

[Fig 6] la figure 6 illustre schématiquement un premier ensemble de premiers points de détour et un deuxième ensemble de deuxièmes points de détour candidats selon une variante ;

[Fig 7] la figure 7 illustre schématiquement un voisinage d'un deuxième point de détour candidat selon un mode de réalisation;

[Fig 8] la figure 8 est un logigramme des principales étapes d'un procédé de génération de trajectoire selon un deuxième mode de réalisation.

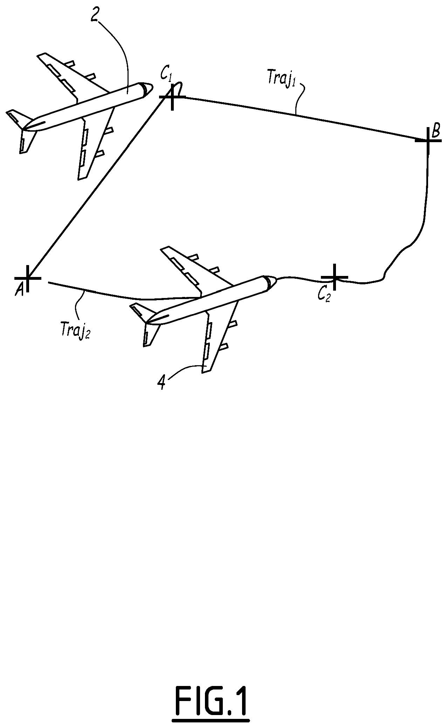

La figure 1 illustre schématiquement un scénario d'application de l'invention. Deux appareils mobiles 2, 4, par exemple des aéronefs, avec ou sans pilote à bord, se déplacent d'un point de départ A vers un point d'arrivée B, avec des contraintes temporelles pour réaliser une synchronisation.

Il est entendu que l'invention n'est pas limitée à un type particulier d'appareil mobile, et trouve des applications pour des appareils mobiles aériens, marins, sous-marins, terrestres.

Le procédé de génération de trajectoire(s) s'applique pour chaque appareil mobile, les contraintes temporelles, notamment une contrainte de durée de la trajectoire, étant appliquées à chaque appareil mobile, en fonction d'une mission à effectuer.

Chaque appareil 2, 4 de l'exemple de la figure 1 se déplace selon une trajectoire $Traj_1$, $Traj_2$ calculée, en passant par un point de détour $C_1$, $C_2$ introduit pour respecter une contrainte temporelle donnée. Les trajectoires $Traj_1$, $Traj_2$, et les points de détour C1, C2 sont obtenus selon un procédé décrit plus en détail ci-après.

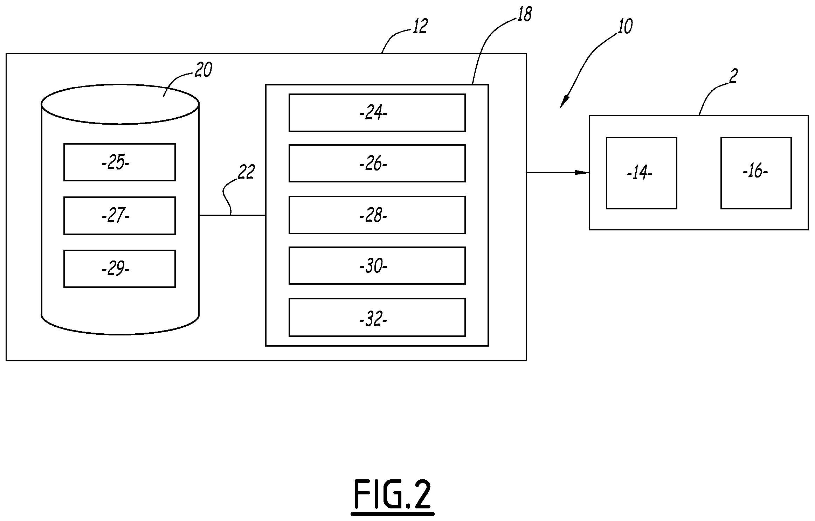

La figure 2 illustre schématiquement un exemple de système de guidage 10 d'appareil mobile 2 dans lequel l'invention est appliquée.

L'appareil mobile 2 est par exemple un aéronef, de type avec ou sans pilote à bord.

L'appareil mobile a des contraintes de déplacement, qui sont soit dues à des limitations mécaniques ou aérodynamiques, soit dues à des limitations d'acceptabilité pour le pilote ou pour la mission effectuée. Les contraintes de déplacement incluent notamment une vitesse minimale et une vitesse maximale.

Dans le système de guidage 10, l'appareil mobile 2 reçoit des commandes de guidage d'un dispositif de calcul 12. Par exemple, le dispositif de calcul 12 est situé dans un centre de calcul au sol, et les commandes de guidage sont communiquées à l'appareil mobile 2 via une liaison de communication sans fil. En variante, le dispositif de calcul 12 est embarqué par l'appareil mobile 2.

Le dispositif de calcul 12 est configuré pour calculer une ou plusieurs trajectoires selon le procédé de génération de trajectoire(s) décrit plus en détail ci-après.

Par exemple, la génération de trajectoires est effectuée dans le cadre d'une planification de mission de l'appareil mobile 2, par exemple pour une planification collaborative avec d'autres appareils mobiles non représentés.

La planification de mission implique la prise en considération de nombreuses conditions de fonctionnement et d'environnement.

La contrainte temporelle est satisfaite si pour un appareil mobile, la trajectoire de déplacement entre un point A de départ et un point B d'arrivée a une durée T comprise dans une plage temporelle de durée donnée, par exemple comprise entre $T_{min}$ et $T_{max}$, l'appareil mobile ayant une vitesse comprise entre $V_{min}$ et $V_{max}$. La longueur de la trajectoire correspondante est comprise dans la plage de longueurs:

[MATH1]

$$[T_{min} \times V_{min}, T_{max} \times V_{max}].$$

Pour satisfaire une contrainte temporelle, à vitesse de déplacement constante ou comprise dans un intervalle de vitesses, une trajectoire détournée par un point de détour est calculée.

Le dispositif de calcul 12 est configuré pour générer une ou plusieurs trajectoires respectant la contrainte temporelle, chaque trajectoire générée étant une trajectoire détournée, calculée sur la base d'un point de détour sélectionné. Le point de détour est sélectionné dans un périmètre spatial donné.

Une trajectoire est définie par une liste de points à parcourir, les points étant définis par des coordonnées spatiales dans un référentiel spatial donné, et par un tracé, par exemple modélisable par des droites/courbes, entre les points successifs.

L'appareil mobile 2 comprend notamment un ordinateur de bord 14 et un système de commande du mouvement 16. Par exemple, l'ordinateur de bord 14 transforme la trajectoire détournée en commandes de guidage, par exemple des commandes d'accélérations longitudinales, mouvements de gouverne etc. qui sont transmises au système de commande de mouvement 16.

Le dispositif de calcul 12 est par exemple un système informatique composé d'un ou plusieurs dispositifs électroniques programmables, i.e. des ordinateurs.

Pour simplifier l'explication, on considère que le dispositif de calcul 12 est un ordinateur comportant un processeur 18 et une unité de mémoire électronique 20, adaptés à communiquer via un bus de communication 22. Ce dispositif de calcul 12 est configuré pour mettre en œuvre l'invention.

Le processeur 18 du dispositif de calcul 12 est configuré pour mettre en œuvre :

- un module 24 de calcul de durée de trajectoire détournée obtenue par une méthode choisie de calcul de trajectoire détournée sur la base d'un point de détour ;
- un module 26 de détermination d'un premier ensemble 25 de premiers points de détour dans le périmètre spatial donné ;
- un module 28 de détermination d'un deuxième ensemble 27 de deuxièmes points de détour, chaque deuxième point de détour ayant une durée estimée de trajectoire détournée associée, respectant ladite contrainte temporelle, l'estimation de durée étant calculée à partir des durées calculées de trajectoire détournée, associées à des premiers points de détour voisins dudit deuxième point de détour,
- un module 30 de détermination d'un troisième ensemble 29 de troisièmes points de détour, comprenant au moins un troisième point de détour, chaque troisième point de détour étant sélectionné parmi lesdits deuxièmes points de détour et étant tel que la durée calculée de trajectoire détournée obtenue par la méthode choisie de calcul de trajectoire détournée sur la base du troisième point de détour respecte la contrainte temporelle,
- un module 32 de calcul de trajectoire sur la base d'un troisième point de détour sélectionné.

Les premier, deuxième et troisièmes ensembles de points de détour sont mémorisés dans l'unité de mémoire électronique 20.

Les modules 24, 26, 28, 30 et 32 sont adaptés à coopérer, comme décrit plus en détail ci-après, pour mettre en œuvre un procédé de génération de trajectoire(s) respectant une contrainte temporelle prédéterminée.

Dans un mode de réalisation, les modules 24, 26, 28, 30 et 32 sont réalisés sous forme d'instructions logicielles formant un programme d'ordinateur, qui, lorsqu'il est exécuté par un ordinateur, met en œuvre un procédé de génération de trajectoire selon l'invention.

En variante non représentée, les modules 24, 26, 28, 30 et 32 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

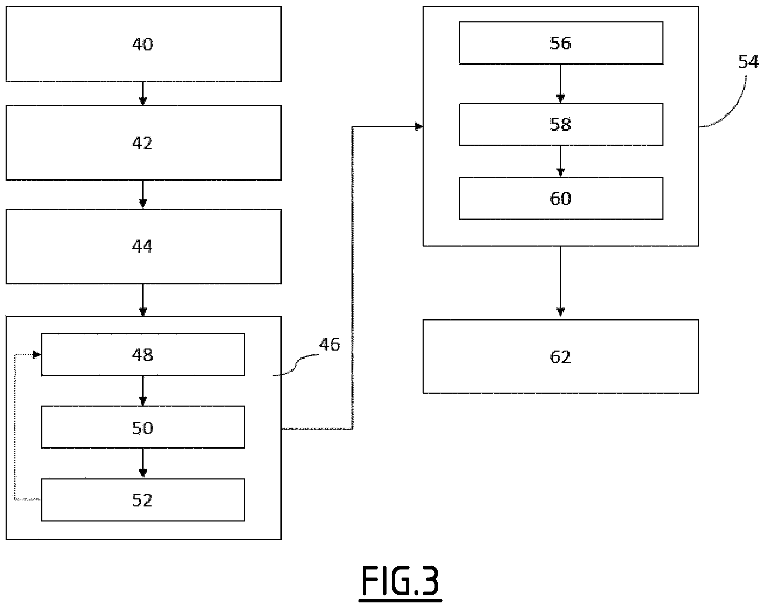

La figure 3 est un logigramme des principales étapes d'un premier mode de réalisation d'un procédé de génération de trajectoire(s) respectant une contrainte temporelle, mis en œuvre par un processeur d'un dispositif de calcul programmable.

En entrée du procédé sont fournis : le périmètre spatial considéré, qui est un périmètre 2D ou 3D selon le cas d'application, un point de départ A, défini par ses coordonnées dans un référentiel 2D ou 3D choisi, et un point d'arrivée B, également défini par ses coordonnées dans le référentiel choisi.

Chaque trajectoire d'appareil mobile, partant du point de départ (point A) vers le point d'arrivée (point B), et détournée sur la base d'un point de détour C, est générée en mettant en œuvre une méthode choisie de calcul de trajectoire détournée.

Dans un mode de réalisation, la méthode choisie est une méthode utilisant un maillage du périmètre spatial choisi et des cartes de coût calculées, associées respectivement au point de départ A et au point d'arrivée B, et une méthode de propagation de front d'onde, décrite dans la demande de brevet FR 20 12674. Cette méthode permet de générer une trajectoire détournée passant par un point de détour C sélectionné, à partir d'une demi-trajectoire reliant le point de départ A au point de détour C, et une deuxième demi-trajectoire reliant le point de détour C au point d'arrivée B.

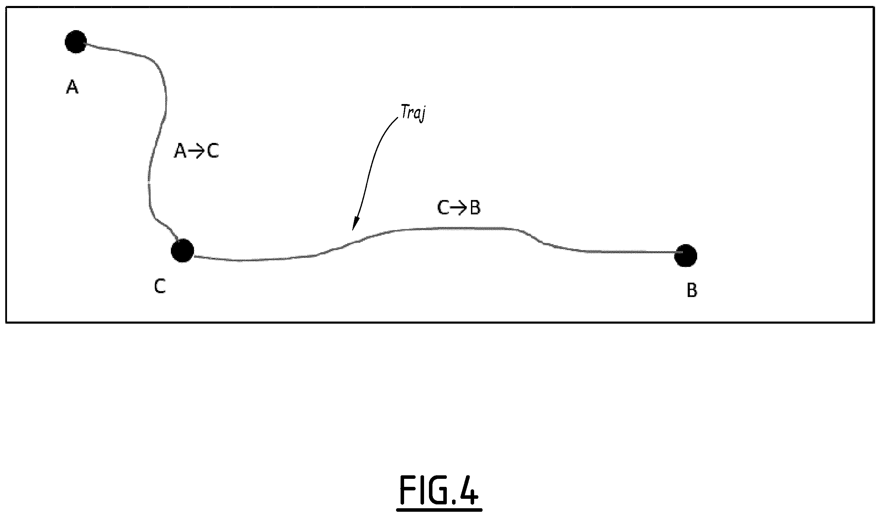

La figure 4 illustre schématiquement une trajectoire détournée Traj obtenue par une telle méthode.

En variante, toute autre méthode de calcul d'une trajectoire entre le point de départ A et le point d'arrivée B en passant par un point de détour C sélectionné est utilisable.

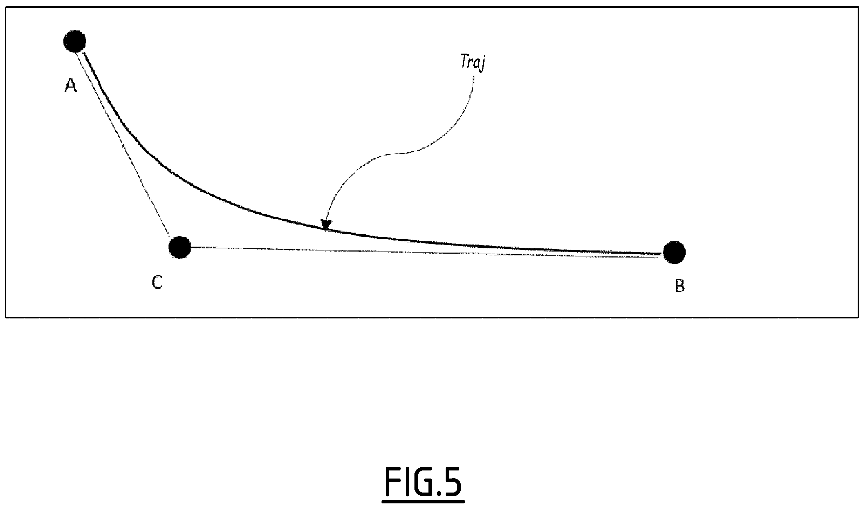

Dans un mode de réalisation, la trajectoire est générée en utilisant le point de détour C sélectionné, sans passer effectivement par le point de détour C. Par exemple, comme illustré schématiquement à la figure 5, une trajectoire détournée Traj est obtenue par une construction asymptotique ou une courbe paramétrique, par exemple, de type Bézier (ou B-spline) dont un point de contrôle est le point de détour C.

Le procédé de génération de trajectoire(s) comporte une étape 40 d'acquisition des données d'entrée comprenant les coordonnées des points de départ et d'arrivée, le périmètre spatial et de la plage temporelle $[T_{min}, T_{max}]$ représentative de la contrainte temporelle. En variante, c'est une plage de longueurs correspondante (cf équation [MATH 1]) qui est obtenue.

Ensuite, le procédé comporte une étape 42 de détermination d'un premier ensemble E1 de premiers points de détour, et une étape 44 de calcul et mémorisation d'une durée calculée de trajectoire (ou, de manière équivalente, de longueur de trajectoire) associée à chaque premier point de détour.

Plusieurs modes de réalisation de l'étape 42 de détermination d'un premier ensemble E1 de premier points de détour sont envisagés.

Selon un mode de réalisation, le premier ensemble E1 est défini par une grille régulière, de premier pas donné.

Selon une variante, le premier ensemble E1 est constitué d'un nombre N1 de points distribués aléatoirement ou pseudo-aléatoirement dans le périmètre spatial ou dans une partie du périmètre spatial, une telle partie étant par exemple sélectionnée sur un critère contextuel, par exemple en fonction d'informations météorologiques ou géographiques. On approfondit ainsi la recherche de détours dans une zone préférée *a priori.*

L'étape 44 de calcul de durée associée aux premiers points de détour met en œuvre la méthode choisie de calcul de trajectoire détournée, pour chacun des premiers points de détour $C_k^1$ du premier ensemble E1. En effet, à cette étape, la durée effective de trajectoire est calculée et mémorisée. Dans un mode de réalisation, la méthode de génération de trajectoire détournée décrite dans la demande de brevet FR 20 12674 est utilisée.

En variante, toute méthode de calcul de trajectoire de A vers B détournée sur la base d'un point de détour $C_k^1$ est applicable, par exemple une méthode de modélisation mathématique utilisant des courbes de Bézier. La durée de parcours effectif d'une telle trajectoire est calculée, connaissant la vitesse de l'appareil mobile.

A l'issue de l'étape 44 les premiers points de détour sont définis par leurs coordonnées, et une information de durée calculée de trajectoire (e.g. durée ou longueur de trajectoire), appelée durée calculée dans la suite, associée à chaque premier point de détour. Ces informations sont mémorisées en association avec chaque premier point de détour.

Ensuite, le procédé comporte une étape 46 de détermination d'un deuxième ensemble E2 de deuxièmes points de détour notés $C_l^2$. Cette étape 46 de détermination comporte une sélection 48 de deuxièmes points de détour candidats, et pour chacun de ces deuxièmes points de détour candidats, une estimation 50 de durée de trajectoire associée, dite durée estimée, l'estimation étant effectuée par un calcul en fonction des durées associées à des premiers points de détour voisins.

De plus, il est vérifié à une étape de vérification 52 si la durée estimée est compatible avec la contrainte temporelle, et le deuxième point de détour candidat est maintenu dans le deuxième ensemble E2 de points de détour uniquement si la durée estimée par calcul est compatible avec la contrainte temporelle. Par exemple, il est vérifié si la durée estimée est comprise dans la plage temporelle représentative de la contrainte temporelle.

Dans un mode de réalisation, les deuxièmes points de détour candidats sont distincts des premiers points de détour.

En variante, au moins certains des premiers points de détour sont considérés parmi les deuxièmes points de détour candidats.

Dans un mode de réalisation, les premiers points de détour sont les points d'une première grille régulière définie par un premier pas de grille, et les deuxièmes points de détour candidats sont sélectionnés dans une deuxième grille régulière, de deuxième pas de grille, inférieur au premier pas de grille.

Par exemple, le deuxième pas de grille est choisi en fonction d'un nombre N2 de deuxièmes points de détour candidats à tester. Ceci peut par exemple se faire par itérations successives sur le deuxième pas de grille, que l'on réduit jusqu'à ce que le nombre de points E2 résultant soit jugé suffisant.

Selon une variante, un nombre N2 de deuxièmes points de détour candidats est distribué aléatoirement ou pseudo-aléatoirement dans le périmètre spatial ou dans une partie du périmètre spatial, une telle partie étant par exemple sélectionnée sur un critère contextuel, par exemple en fonction d'information météorologiques ou géographiques.

Selon une autre variante, les deuxièmes points de détour candidats sont positionnés sur des sous-grilles de troisième pas de grille, autour de premiers points de détour choisis en faisant appel à un algorithme de génération de grille multi résolue, comme par exemple l'algorithme de Maubach, décrit dans l'article « Local bisection refinement for n-simplicial grids generated by reflection », J. M. Maubach, SIAM Journal on Scientific Computing, 1995.

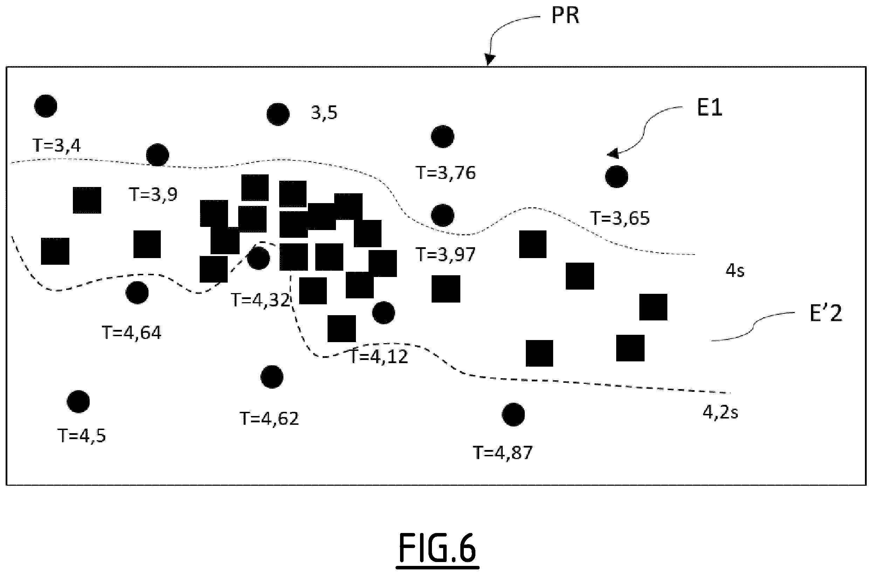

Par exemple, la figure 6 illustre un premier ensemble E1 de premiers points de détour positionnés aléatoirement, représentés par des ronds, et ayant une durée calculée de trajectoire détournée associée, et un ensemble E'2 de deuxièmes points de détour candidats représentés par des carrés, positionnés pseudo-aléatoirement, dans une partie du périmètre spatial.

L'estimation de durée effectuée à l'étape 50 est par exemple effectuée, pour un deuxième point de détour candidat $C_l^2$, par interpolation des valeurs de durée calculées associées à un nombre K de premiers points de détour $C_i^1$ voisins du deuxième point de détour candidat $C_l^2$.

Selon un premier mode de réalisation, pour un deuxième point de détour candidat $C_l^2$, les K premiers points de détour $C_i^1$, plus proches voisins de $C_l^2$, sont sélectionnés, et les distances respectives $d_{i,l}$ entre le deuxième point de détour candidat et chacun des premiers points de détour voisins sont prises en considération dans la formule de calcul. Les distances sont de préférence les distances euclidiennes.

Par exemple, la durée estimée est calculée par la formule d'interpolation suivante :

[MATH 2]

$$T_{est}\left(C_l^2\right) = \frac{\sum_{i \in V} d_{i,l} T_i}{\sum_{i \in V} d_{i,l}}$$

Où $T_{est}\left(C_l^2\right)$ est la durée estimée de trajectoire détournée associée au deuxième point de détour candidat $C_l^2$, $T_i$ est la durée calculée de trajectoire associée au premier point de détour $C_i^i$ et V désigne l'ensemble, de cardinal K, d'indices des premiers points de détour formant le voisinage du deuxième point de détour candidat.

Selon un deuxième mode de réalisation, la durée estimée est calculée par la formule d'interpolation suivante :

[MATH 3]

$$T_{est}\left(C_l^2\right) = \frac{\sum_{i \in V} d_{i,l}^2 T_l}{\sum_{i \in V} d_{i,l}^2}$$

Où $d_{i,l}^2$ est le carré de la distance euclidienne $d_{i,l}$.

Avantageusement, le calcul de durée estimée par une formule d'interpolation est rapide et nécessite peu de ressources calculatoires.

Le nombre K de voisins est un nombre quelconque, par exemple déterminé en fonction de la puissance de calcul disponible. Par exemple K=5. On prendra alors par exemple les 5 points de E1 les plus proches de chaque point de E'2.

Selon une variante, le nombre K de voisins n'est pas fixé, mais tous les premiers points de détour situés à l'intérieur d'un cercle de rayon R donné sont considérés comme étant des points du voisinage. En d'autres termes, dans cette variante, le voisinage est défini par un cercle de rayon donné autour du deuxième point de détour candidat. Lorsque les deuxièmes points de détour candidats sont situés sur une deuxième grille régulière de deuxième pas $P_2$ donné, le rayon est par exemple choisi en fonction du deuxième pas $P_2$, par exemple $R=2P_2$.

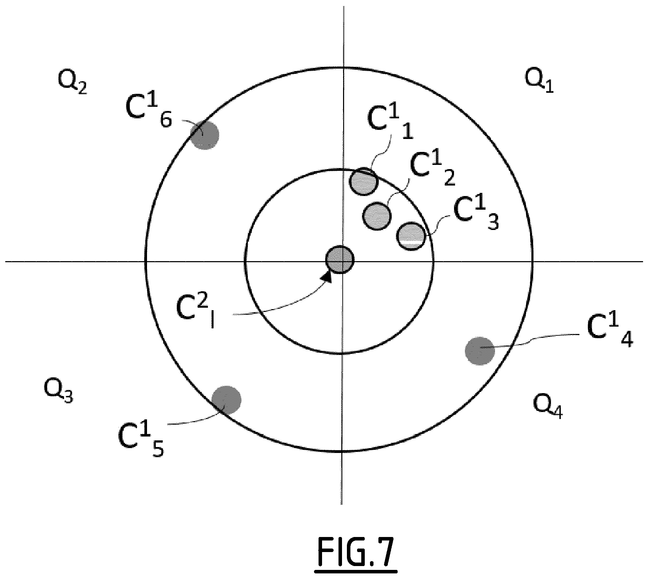

Selon une autre variante, adaptée plus particulièrement au cas où la distribution des premiers points de détour et des deuxièmes points de détour est aléatoire ou pseudo-aléatoire, le rayon du cercle définissant le voisinage n'est pas fixé, mais variable, pour que le voisinage comprenne un nombre donné de premiers points de détour, ou respecte une répartition des premiers points de détour. Par exemple, la répartition consiste à assurer que la cercle comprend au moins un premier point de détour dans chaque quadrant Q1, Q2, Q3, Q4 autour du deuxième point de détour candidat $C_l^2$, comme illustré schématiquement à la figure 7.

De retour à la figure 3, l'étape 46 de détermination d'un deuxième ensemble E2 de deuxièmes points de détour est suivie d'une étape 54 de détermination d'un troisième ensemble E3 de troisièmes points de détour, comportant une sélection 56 de troisièmes points de détour candidats parmi les deuxièmes points de détour du deuxième ensemble E2, et un calcul 58, pour chaque troisième point de détour candidat, de la durée de trajectoire générée par la méthode choisie de calcul de trajectoire détournée sur la base de ce troisième point de détour. Enfin, une vérification 60 du respect de la contrainte temporelle est appliquée, afin de retenir, dans le troisième ensemble E3, uniquement les troisièmes points de détour dont la durée calculée, et non plus seulement estimée, respecte la contrainte temporelle.

Ainsi, le troisième ensemble E3 de troisièmes points de détour est un sous-ensemble du deuxième ensemble de points de détour, et ce troisième ensemble peut être réduit à un seul élément.

Le troisième ensemble E3 comporte uniquement des troisièmes points de détour pour lesquels la durée calculée de trajectoire associée, c'est-à-dire détournée sur la base de ce troisième point de détour, respecte effectivement la contrainte temporelle. En effet, il peut y avoir une différence entre la durée estimée à l'étape d'estimation de durée 50 et la durée calculée à l'étape 58 pour une trajectoire générée sur la base du point de détour considéré par la méthode choisie de calcul de trajectoire détournée.

Enfin, le procédé comporte une obtention 62 de trajectoire détournée sur la base d'un troisième point de détour sélectionné ou de plusieurs trajectoires détournées sur la base de plusieurs troisièmes points de détour sélectionnés, selon le cas d'application.

Par exemple, dans un cas de planification à l'avance de mission complexe, plusieurs troisièmes points de détour sont sélectionnés et plusieurs trajectoires détournées sont générées. Dans un mode de réalisation, la pluralité de trajectoires détournées est ensuite présentée à un opérateur pour sélectionner la solution de détour qu'il jugera la mieux adaptée à son intention.

Par exemple, dans un contexte opérationnel, une trajectoire est générée sur la base d'un troisième point de détour sélectionné, et cette trajectoire est transmise pour commander le déplacement d'une plateforme mobile.

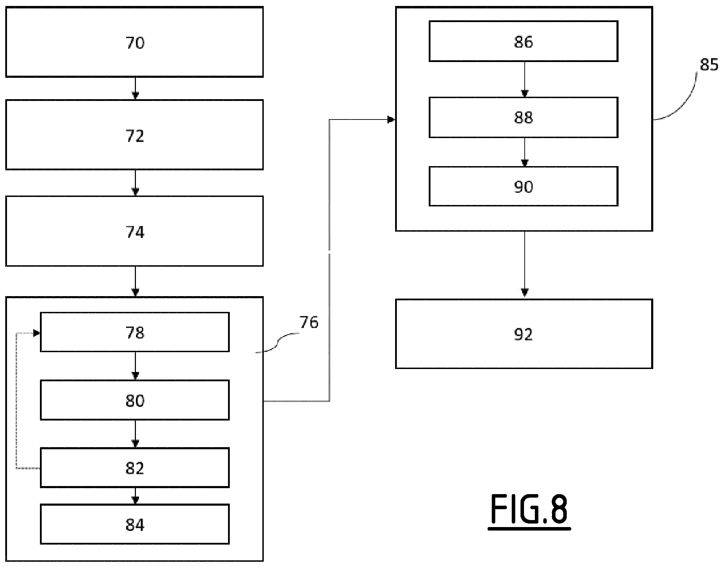

La figure 8 est un logigramme des principales étapes d'un deuxième mode de réalisation d'un procédé de génération de trajectoire(s) respectant une contrainte temporelle, mis en œuvre par un processeur d'un dispositif de calcul programmable.

Ce deuxième mode de réalisation comporte des étapes analogues aux étapes du premier mode de réalisation décrit en référence à la figure 3, et des étapes spécifiques.

Dans ce deuxième mode de réalisation, le procédé comprend une étape 70 d'acquisition des données d'entrée analogue à l'étape 40, et une étape 72 de détermination d'un premier ensemble E1 de premiers points de détour analogue à l'étape 42.

Il comprend en outre une étape 74 de calcul et mémorisation d'une durée calculée de trajectoire (ou, de manière équivalente, de longueur de trajectoire) associée à chaque premier point de détour, ainsi que d'un facteur de mérite associé. Le calcul de la durée de trajectoire est effectué en fonction de la méthode choisie de calcul de trajectoire détournée, comme expliqué ci-dessus en référence à l'étape 44 de la figure 3.

Le facteur de mérite est calculé en fonction de considérations de contexte applicatif ou de contexte fonctionnel, par exemple en fonction des données géographiques (relief, courants), de prévisions météorologiques, de conditions de sécurité, d'éventuelles restrictions imposées. Le facteur de mérite calculé pour chaque premier point de détour est mémorisé en association avec le premier point de détour et la durée calculée de trajectoire détournée associée.

Par exemple, le facteur de mérite pourrait être défini comme $\frac{1}{dT}$ où dT est le temps passé à naviguer dans des nuages. Ce temps dT serait borné entre 1s et 1000s (en considérant qu'il n'y a pas plus de mérite à naviguer 1100s que 1300s dans une zone nuageuse). Le facteur de mérite est ici une valeur numérique comprise entre 0,001 et 1, plus le facteur de mérite étant élevé, plus le point de détour correspondant étant considéré satisfaisant selon les valeurs de contexte utilisées pour le calcul.

Le procédé comprend une étape 76 de détermination d'un deuxième ensemble de deuxièmes points de détour, analogue à l'étape 46 décrite ci-dessus, comprenant des étapes 78, 80, 82 analogues aux étapes 48, 50 et 52 décrites ci-dessus, ainsi qu'une étape 84 de calcul de facteur de mérite estimé, associé à chaque deuxième point de détour du deuxième ensemble E2 de points de détour.

Par exemple, une méthode de calcul par interpolation analogue à celle utilisée à l'étape 80 est appliquée sur les valeurs de facteur de mérite des premiers points de détour du voisinage choisi, pour obtenir, pour chaque deuxième point de détour, un facteur de mérite estimé associé.

Les formules mathématiques [MATH 2] et [MATH 3] sont facilement transposables, en remplaçant la durée calculée par le facteur de mérite calculé pour chaque premier point de détour du voisinage.

Ainsi, un facteur de mérite estimé est obtenu et mémorisé pour chaque deuxième point de détour retenu.

Dans une variante, le facteur de mérite utilisé est une valeur composite d'un ensemble initial de facteurs de mérites. Par exemple, en reprenant l'exemple évoqué ci-dessus, le facteur de mérite composite combine un facteur de mérite pénalisant le temps passé dans les nuages, et un facteur de mérite pénalisant le temps passé au-dessus de zones habitables, le facteur de mérite composite étant calculé par une combinaison de ces deux facteurs de mérite : $\frac{\alpha}{dT1} + \frac{\beta}{dT2}$ . Bien entendu, d'autres formules de combinaison ou d'agrégation de facteurs de mérite pour calculer un facteur de mérite composite sont envisageables.

Ensuite, le procédé comprend une étape 85 de détermination d'un troisième ensemble de troisièmes points de détour, comportant une étape 86 d'ordonnancement des deuxièmes points de détour du deuxième ensemble E2 dans un ordre dépendant des facteurs de mérite, par l'ordre décroissant des facteurs de mérite, une étape 88 de calcul de durée de trajectoire générée par la méthode choisie de calcul de trajectoire détournée, dans cet ordre décroissant de facteur de mérite, et une étape 90 de vérification du respect de la contrainte temporelle, analogue à l'étape 60.

Dans un mode de réalisation, dès qu'un nombre L de troisièmes points de détour est obtenu, par exemple L compris entre 3 et 6, l'étape 85 est arrêtée et suivie de l'étape 92 analogue à l'étape 62 précédemment décrite. Dans cet exemple, le système retournerait à l'opérateur 3 à 6 solutions de détour possible, et c'est l'opérateur qui sélectionnerait la plus proche de son intention.

Dans un mode de réalisation, L=1 et ainsi, le troisième point de détour qui a le facteur de mérite le plus élevé tout en étant associé à une durée calculée de trajectoire détournée respectant la contrainte temporelle est choisi pour la génération de trajectoire.

Avantageusement, en plus du respect de la contrainte temporelle, au moins un autre critère est satisfait pour ce troisième point de détour sélectionné, ce qui assure l'obtention d'une trajectoire détournée optimisée.

Avantageusement, le procédé de l'invention permet d'obtenir rapidement et à faible coût calculatoire un deuxième ensemble de deuxièmes points de détour, pour lesquels la durée estimée de trajectoire détournée respecte la contrainte temporelle.

Avantageusement, le calcul d'une durée estimée de trajectoire détournée est rapide et de faible complexité, car il ne nécessite pas la génération effective de cette trajectoire détournée.

## Revendications

1. Procédé de génération de trajectoire(s) d'un appareil mobile aérien ou maritime, respectant une contrainte temporelle prédéterminée, entre un point de départ et un point d'arrivée, dans un périmètre spatial donné, la génération de trajectoire mettant en oeuvre une méthode choisie de calcul de trajectoire détournée, sur la base d'un point de détour sélectionné, reliant le point de départ et le point d'arrivée, le procédé étant mis en oeuvre par un processeur d'un dispositif de calcul programmable et étant **caractérisé en ce qu'**il comporte des étapes de :

- détermination (42, 72) d'un premier ensemble de premiers points de détour dans ledit périmètre spatial donné, et pour chacun des premiers points de détour, calcul (44, 74) d'une durée calculée de trajectoire détournée obtenue par ladite méthode choisie de calcul de trajectoire détournée sur la base dudit premier point de détour,

- détermination (46, 76) d'un deuxième ensemble de deuxièmes points de détour, chaque deuxième point de détour ayant une durée estimée de trajectoire détournée associée, respectant ladite contrainte temporelle, ladite durée estimée étant calculée (50, 80) à partir de durées associées à des premiers points de détour voisins dudit deuxième point de détour.

2. Procédé selon la revendication 1, comportant en outre une détermination (54, 85) d'un troisième ensemble de troisièmes points de détour, comprenant au moins un troisième point de détour, chaque troisième point de détour étant sélectionné parmi lesdits deuxièmes points de détour et étant tel que la durée calculée de trajectoire détournée obtenue par ladite méthode choisie de calcul de trajectoire détournée sur la base dudit troisième point de détour respecte la contrainte temporelle.

3. Procédé selon la revendication 1 ou 2, dans lequel le calcul (50, 80) de durée estimée de trajectoire détournée associée à un deuxième point de détour met en oeuvre une interpolation de durées calculées associées à des premiers points de détour voisins, prenant en compte une distance entre ledit deuxième point de détour et chacun des premiers points de détour voisins.

4. Procédé selon l'une des revendications 1 à 3, dans lequel la détermination (46, 76) d'un deuxième ensemble de deuxièmes points de détour comporte une sélection (48, 78) de deuxièmes points de détour candidats et, pour chaque deuxième point de détour candidat, une détermination de premiers points de détour voisins.

5. Procédé selon l'une quelconque des revendications 1 à 4, dans lequel ledit premier ensemble comporte des premiers points de détour répartis sur une première grille régulière de premier pas de grille prédéterminé, et ledit deuxième ensemble de deuxièmes points de détour est obtenu à partir de deuxièmes points de détour candidats, répartis sur une deuxième grille régulière de deuxième pas de grille, le deuxième pas de grille étant inférieur au premier pas de grille.

6. Procédé selon l'une quelconque des revendications 1 à 5, dans lequel lesdits premiers points de détour et lesdits deuxièmes points de détour sont répartis aléatoirement ou pseudo-aléatoirement dans au moins une partie dudit périmètre spatial.

7. Procédé selon l'une quelconque des revendications 1 à 6, comportant en outre, pour chaque premier point de détour, un calcul et une mémorisation (74) d'au moins un facteur de mérite associé, et, pour chaque deuxième point de détour, un calcul (84) d'au moins un facteur de mérite estimé associé, la détermination (85) d'un troisième ensemble de troisièmes points de détour étant en outre fonction desdits facteurs de mérite estimés.

8. Procédé selon la revendication 7, comportant un ordonnancement (86) des deuxièmes points de détour en fonction d'un facteur de mérite associé et la sélection d'un troisième point de détour étant effectuée dans l'ordre décroissant des valeurs de facteur de mérite.

9. Programme d'ordinateur comportant des instructions logicielles qui, lorsqu'elles sont exécutées par un dispositif électronique programmable, mettent en oeuvre un procédé de génération de trajectoire conforme aux revendications 1 à 8.

10. Dispositif de génération de trajectoire(s) d'un appareil mobile aérien ou maritime, une contrainte temporelle prédéterminée, entre un point de départ et un point d'arrivée, dans un périmètre spatial donné, comportant un module configuré pour une génération de trajectoire mettant en oeuvre une méthode choisie de calcul de trajectoire détournée, sur la base d'un point de détour sélectionné, reliant le point de départ et le point d'arrivée, le dispositif étant **caractérisé en ce qu'**il comporte au moins un processeur configuré pour mettre en oeuvre :

- un module (26) configuré pour déterminer un premier ensemble de premiers points de détour dans ledit périmètre spatial donné, et pour chacun des premiers points de détour, calculer une durée calculée de trajectoire détournée obtenue par ladite méthode choisie de calcul de trajectoire détournée sur la base dudit premier point de détour,

- un module (28) configuré pour déterminer un deuxième ensemble de deuxièmes points de détour, chaque deuxième point de détour ayant une durée estimée de trajectoire détournée associée, respectant ladite contrainte temporelle, ladite durée estimée étant calculée à partir de durées calculées associées à des premiers points de détour voisins dudit deuxième point de détour.

11. Dispositif selon la revendication 10, comportant en outre un module (30) de détermination d'un troisième ensemble de troisièmes points de détour, comprenant au moins un troisième point de détour, chaque troisième point de détour étant sélectionné parmi lesdits deuxièmes points de détour et étant tel que la durée calculée de trajectoire détournée obtenue par ladite méthode choisie de calcul de trajectoire détournée sur la base dudit troisième point de détour respecte la contrainte temporelle.

## Patentansprüche

1. Verfahren zur Erzeugung von Trajektorien eines mobilen Luftfahrt- oder Wasserfahrtgeräts, das eine vorbestimmte zeitliche Beschränkung zwischen einem Startpunkt und einem Zielpunkt in einem gegebenen räumlichen Perimeter einhält, wobei die Trajektorie-Erzeugung ein ausgewähltes Verfahren zum Berechnen einer umgeleiteten Trajektorie basierend auf einem ausgewählten Umleitungspunkt implementiert, der den Startpunkt und den Zielpunkt verbindet, wobei das Verfahren von einem Prozessor einer programmierbaren Rechenvorrichtung implementiert wird und **dadurch gekennzeichnet ist, dass** es die folgenden Schritte umfasst:

   - Bestimmen (42, 72) eines ersten Satzes von ersten Umleitungspunkten in dem gegebenen räumlichen Perimeter und, für jeden der ersten Umleitungspunkte, Berechnen (44, 74) einer berechneten Dauer der umgeleiteten Trajektorie, die durch das ausgewählte Verfahren zum Berechnen der umgeleiteten Trajektorie basierend auf dem ersten Umleitungspunkt erlangt wird,
   - Bestimmen (46, 76) eines zweiten Satzes von zweiten Umleitungspunkten, wobei jeder zweite Umleitungspunkt eine assoziierte geschätzte Dauer der umgeleiteten Trajektorie aufweist, die die Zeitbeschränkung einhält, wobei die geschätzte Dauer anhand von Dauern berechnet wird (50, 80), die mit ersten Umleitungspunkten assoziiert sind, die an den zweiten Umleitungspunkt angrenzen.

2. Verfahren nach Anspruch 1, ferner umfassend ein Bestimmen (54, 85) eines dritten Satzes von dritten Umleitungspunkten, umfassend mindestens einen dritten Umleitungspunkt, wobei jeder dritte Umleitungspunkt aus den zweiten Umleitungspunkten ausgewählt ist und derart ist, dass die berechnete Dauer der umgeleiteten Trajektorie, die durch das ausgewählte Verfahren zum Berechnen der umgeleiteten Trajektorie basierend auf dem dritten Umleitungspunkt erlangt wird, die zeitliche Beschränkung einhält.

3. Verfahren nach Anspruch 1 oder 2, wobei das Berechnen (50, 80) der geschätzten Dauer der mit einem zweiten Umleitungspunkt assoziierten Umleitungstrajektorie eine Interpolation von berechneten Dauern implementiert, die mit ersten angrenzenden Umleitungspunkten assoziiert sind, wobei ein Abstand zwischen dem zweiten Umleitungspunkt und jedem der ersten angrenzenden Umleitungspunkte berücksichtigt wird.

4. Verfahren nach einem der Ansprüche 1 bis 3, wobei das Bestimmen (46, 76) eines zweiten Satzes von zweiten Umleitungspunkten ein Auswählen (48, 78) von zweiten Kandidaten-Umleitungspunkten und für jeden zweiten Kandidaten-Umleitungspunkt ein Bestimmen von angrenzenden ersten Umleitungspunkten umfasst.

5. Verfahren nach einem der Ansprüche 1 bis 4, wobei der erste Satz erste Umleitungspunkte umfasst, die über ein erstes regelmäßiges Raster mit einer vorbestimmten ersten Rasterteilung verteilt sind, und der zweite Satz von zweiten Umleitungspunkte anhand von
zweiten Kandidaten-Umleitungspunkten erlangt wird, die über ein regelmäßiges zweites Raster mit einer zweiten Rasterteilung verteilt sind, wobei die zweite Rasterteilung kleiner ist als die erste Rasterteilung.

6. Verfahren nach einem der Ansprüche 1 bis 5, wobei die ersten Umleitungspunkte und die zweiten Umleitungspunkte zufällig oder pseudozufällig über mindestens einen Teil des räumlichen Perimeters verteilt sind.

7. Verfahren nach einem der Ansprüche 1 bis 6, ferner umfassend für jeden ersten Umleitungspunkt ein Berechnen und Abspeichern (74) mindestens eines assoziierten Gütefaktors, und, für jeden zweiten Umleitungspunkt, ein Berechnen (84) mindestens eines assoziierten geschätzten Gütefaktors, wobei das Bestimmen (85) eines dritten Satzes von dritten Umleitungspunkten ferner von den geschätzten Gütefaktoren abhängt.

8. Verfahren nach Anspruch 7, umfassend eine Reihenfolge (86) der zweiten Umleitungspunkte abhängig von einem assoziierten Gütefaktor und wobei die Auswahl eines dritten Umleitungspunkts in absteigender Reihenfolge der Gütefaktorwerte erfolgt.

9. Computerprogramm, umfassend Softwareanweisungen, die, wenn sie von einer programmierbaren elektronischen Vorrichtung ausgeführt werden, ein Verfahren zum Erzeugen einer Trajektorie gemäß den Ansprüchen 1 bis 8 implementieren.

**10.** Vorrichtung zur Trajektorie-Erzeugung eines mobilen Luftfahrt- oder Wasserfahrtgeräts, das eine vorbestimmte zeitliche Beschränkung zwischen einem Startpunkt und einem Zielpunkt in einem gegebenen räumlichen Perimeter einhält, umfassend ein Modul, das für eine Trajektorie-Erzeugung konfiguriert ist, die ein ausgewähltes Verfahren zum Berechnen einer umgeleiteten Trajektorie basierend auf einem ausgewählten Umleitungspunkt implementiert, der den Startpunkt und den Zielpunkt verbindet, wobei die Vorrichtung **dadurch gekennzeichnet ist, dass** sie mindestens einen Prozessor umfasst, der konfiguriert ist, um Folgendes zu implementieren:

- ein Modul (26), das konfiguriert ist, um einen ersten Satz von ersten Umleitungspunkten in dem gegebenen räumlichen Perimeter zu bestimmen und für jeden der ersten Umleitungspunkte eine berechnete Dauer der Umleitungstrajektorie zu berechnen, die durch das ausgewählte Verfahren zum Berechnen der Umleitungstrajektorie basierend auf dem ersten Umleitungspunkt erlangt wird,
- ein Modul (28), das konfiguriert ist, um einen zweiten Satz von zweiten Umleitungspunkten zu bestimmen, wobei jeder zweite Umleitungspunkt eine assoziierte geschätzte Dauer der umgeleiteten Trajektorie aufweist, die die Zeitbeschränkung einhält, wobei die geschätzte Dauer anhand von berechneten Dauern berechnet wird, die mit ersten Umleitungspunkten assoziiert sind, die an den zweiten Umleitungspunkt angrenzen.

**11.** Vorrichtung nach Anspruch 10, ferner umfassend ein Modul (30) zum Bestimmen eines dritten Satzes von Umleitungspunkten, umfassend mindestens einen dritten Umleitungspunkt, wobei jeder dritte Umleitungspunkt aus den zweiten Umleitungspunkten ausgewählt ist und derart ist, dass die berechnete Dauer der umgeleiteten Trajektorie, die durch das ausgewählte Verfahren zum Berechnen der umgeleiteten Trajektorie basierend auf dem dritten Umleitungspunkt erlangt wird, die zeitliche Beschränkung einhält.

**Claims**

**1.** Method for generating a path for an air or maritime mobile device, in accordance with a predetermined time constraint, between a departure point and an arrival point, within a given spatial perimeter, with paths generated using a chosen diverted path calculation method, on the basis of a selected diversion point, linking the departure point and the arrival point, the method being implemented by a processor of a programmable computing device and comprising the following steps:

- determination (42, 72) of a first set of first diversion points within said given spatial perimeter, and for each of said first diversion points, calculation (44, 74) of a calculated diverted path duration obtained by said selected diverted path calculation method on the basis of said first diversion point,
- determination (46, 76) of a second set of second diversion points, each second diversion point having an associated estimated diverted path duration, in accordance with said time constraint, said estimated duration being calculated (50, 80) from durations associated with first diversion points neighbouring said second diversion point.

**2.** Method according to claim 1, further comprising determination (54, 85) of a third set of third diversion points, comprising at least one third diversion point, each third diversion point being selected from said second diversion points and such that the calculated diverted path duration obtained by said selected diverted path calculation method on the basis of said third diversion point respects the time constraint.

**3.** Method according to claim 1 or 2, in which the calculation (50, 80) of the estimated diverted path duration associated with a second diversion point implements an interpolation of calculated durations associated with first neighbouring diversions points, taking into account a distance between said second diversion point and each of the first neighbouring diversion points.

**4.** Method according to any one of claims 1 to 3, in which the determination (46, 76) of a second set of second diversion points comprises a selection (48, 78) of candidate second diversion points and, for each candidate second diversion point, a determination of neighbouring first diversion points.

**5.** Method according to any one of claims 1 to 4, in which said first set comprises first diversion points distributed over a first regular grid of predetermined first grid spacing, and said second set of second diversion points is obtained from candidate second diversion points distributed over a second regular grid with a grid spacing smaller than the first grid spacing.

**6.** Method according to any one of claims 1 to 5, wherein said first and second diversion points are randomly or pseudo-randomly distributed in at least part of said spatial perimeter.

**7.** Method according to any one of claims 1 to 6, further comprising, for each first deviation point, calculation and storage (74) of at least one associated merit factor, and, for each second deviation point, calculation (84) of at least one associated estimated merit factor, the determination (85) of a third set of third deviation points being furthermore a function of the said estimated merit factors.

8. Method according to claim 7, comprising an ordering (86) of the second diversion points based on an associated merit factor, and the selection of a third diversion point, which is carried out in descending order of the merit factor values.

9. A computer program comprising software instructions which, when executed by a programmable electronic device, implement a path generation method according to any of claims 1 to 8.

10. Path generation system for an air or maritime mobile device, in accordance with a predetermined time constraint, between a departure point and an arrival point, within a given spatial perimeter, including a module configured for path generation using a chosen diverted path calculation method, on the basis of a selected diversion point, linking the departure point and the arrival point, the system being **characterised by** at least one processor configured to implement:

   - a module (26) configured to determine a first set of first diversion points within said given spatial perimeter, and for each of said first diversion points, to calculate a calculated diverted path duration obtained by said selected diverted path calculation method on the basis of said first diversion point,
   - a module (28) configured to determine a second set of second diversion points, each second diversion point having an associated estimated diverted path duration, in accordance with said time constraint, said estimated duration being calculated from calculated durations associated with first diversion points neighbouring said second diversion point.

11. System according to claim 10, further comprising a module (30) for determining a third set of third diversion points, comprising at least one third diversion point, each third diversion point selected from said second diversion points, such that the calculated diverted path duration obtained by said selected diverted path calculation method on the basis of said third diversion point respects the time constraint.

## FIG.1

FIG.2

FIG.3

**FIG.4**

FIG.5

EP 4 453 511 B1

EP 4 453 511 B1

PR

E1

3,5

T=3,4

T=3,9

T=3,76

T=3,65

T=3,97

4s

E'2

T=4,32

T=4,64

T=4,12

4,2s

T=4,62

T=4,5

T=4,87

**FIG.6**

FIG.7

FIG.8

# EP 4 453 511 B1

**Documents brevets cités dans la description**

- FR 3038999 A1
- FR 3025919 A1
- CN 113703483 A
- FR 2012674

**Littérature non-brevet citée dans la description**

- **», J. M. MAUBACH**. Local bisection refinement for n-simplicial grids generated by reflection. *SIAM Journal on Scientific Computing*, 1995